(19) Europäisches Patentamt
European Patent Office
Office européen des brevets

(11) EP 3 184 426 B1

(12) FASCICULE DE BREVET EUROPEEN

(45) Date de publication et mention
de la délivrance du brevet:
**28.08.2019 Bulletin 2019/35**

(51) Int Cl.:
***B64C 27/46*** *(2006.01)*      ***B64C 27/467*** *(2006.01)*

(21) Numéro de dépôt: **16202350.1**

(22) Date de dépôt: **06.12.2016**

(54) **PALE DE ROTOR D AERONEF A GEOMETRIE ADAPTEE POUR L AMELIORATION DE L ACOUSTIQUE LORS D'UN VOL D APPROCHE ET L AMELIORATION DES PERFORMANCES EN VOL D' AVANCEMENT**

ROTORBLATT EINES LUFTFAHRZEUGS MIT ANGEPASSTER GEOMETRIE FÜR DIE AKUSTISCHE VERBESSERUNG IN DER ANFLUGPHASE UND VERBESSERUNG DER LEISTUNGEN IM VORWÄRTSFLUG

AN AIRCRAFT ROTOR BLADE OF SHAPE ADAPTED FOR ACOUSTIC IMPROVEMENT DURING AN APPROACH FLIGHT AND FOR IMPROVING PERFORMANCE IN FORWARD FLIGHT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **21.12.2015 FR 1502662**

(43) Date de publication de la demande:
**28.06.2017 Bulletin 2017/26**

(73) Titulaire: **Airbus Helicopters**
**13725 Marignane Cedex (FR)**

(72) Inventeurs:
• **LEUSINK, Debbie**
**13290 Aix en Provence (FR)**
• **ALFANO, David**
**13090 Aix en Provence (FR)**
• **GARETON, Vincent**
**13280 Ensues la Redonne (FR)**

(74) Mandataire: **GPI & Associés**
**EuroParc de Pichaury**
**Bâtiment B2 - 1er Etage**
**1330, rue Guillibert de la Lauzière**
**13856 Aix-en-Provence Cedex 3 (FR)**

(56) Documents cités:
**EP-A1- 0 565 413      EP-A1- 0 842 846**
**EP-A1- 2 505 500      US-A- 6 116 857**

**Description**

La présente invention est du domaine des surfaces aérodynamiques portantes et plus particulièrement des surfaces aérodynamiques formant une voilure tournante.

La présente invention concerne une pale destinée à un rotor d'aéronef à voilure tournante ainsi qu'un rotor muni d'au moins deux telles pales. Cette pale est plus particulièrement destinée à un rotor principal de sustentation voire de propulsion d'un aéronef à voilure tournante.

Classiquement, une pale s'étend longitudinalement selon son envergure d'une première extrémité destinée à être fixée à un moyeu tournant d'un rotor vers une seconde extrémité dite extrémité libre. Par rapport au rotor, on comprend que la pale s'étend radialement de la première extrémité vers la deuxième extrémité selon une direction d'envergure. De plus, cette pale s'étend transversalement d'un bord d'attaque vers un bord de fuite de la pale, selon la corde de cette pale.

Cette pale est donc entraînée en rotation par un moyeu tournant de ce rotor. L'axe de rotation de ce moyeu correspond donc à l'axe de rotation de la pale.

La première extrémité est généralement désignée par l'expression « début de pale » alors que la seconde extrémité libre est désignée par l'expression « bout de pale ».

En fonctionnement, chaque pale d'un rotor est soumise à des forces aérodynamiques, notamment une force aérodynamique de portance durant le mouvement rotatif de ce rotor permettant de sustenter l'aéronef, voire de le propulser.

Dans ce but, la pale comporte une partie profilée située entre le début de pale et le bout de pale. Cette partie profilée est constituée par une succession de profils aérodynamiques, dénommés par la suite « profils » par commodité, selon la direction d'envergure. Chaque profil est situé dans un plan transversal généralement perpendiculaire à cette direction d'envergure et délimite une section de la pale. Cette partie profilée est agencée entre un début de la partie profilée et le bout de pale et assure l'essentiel de la portance de la pale.

La forme de la zone de transition entre le début de pale et le début de cette partie profilée est généralement imposée par des contraintes de fabrication et des contraintes structurelles de la pale. Cette zone de transition entre le début de pale et le début de cette partie profilée peut être désignée par l'expression « pied de pale » et a des performances aérodynamiques notablement réduites par rapport à celles de la partie profilée. Ce début de la partie profilée est de fait situé entre le début de pale et le bout de pale, à proximité du pied de pale. Cette zone de transition peut toutefois générer une force de portance. En outre, cette zone de transition, située à proximité du moyeu du rotor, a toutefois, quelle que soit sa forme aérodynamique, une faible contribution sur la portance totale de la pale.

Par exemple, les profils des sections de la pale sur la partie profilée sont caractérisés par un bord de fuite mince, idéalement nulle, alors que le bord de fuite au niveau du début de pale et de la zone de transition entre le début de pale et le début de cette partie profilée est épais, voire arrondi.

Un aéronef à voilure tournante présente l'avantage de pouvoir évoluer aussi bien avec des vitesses d'avancement élevées lors de vols de croisière qu'avec de très faibles vitesses d'avancement et de réaliser également des vols stationnaires. Un aéronef à voilure tournante présente ainsi l'avantage de pouvoir atterrir sur des zones de surfaces réduites et donc au plus près des zones habitées par exemple ou encore sur des plateformes d'appontage.

Toutefois, les vols d'avancement à des vitesses élevées exigent des caractéristiques aérodynamiques des pales qui peuvent être différentes voire défavorables pour les vols à très faibles vitesses d'avancement et les vols stationnaires.

De même, les caractéristiques aérodynamiques des pales influent également sur le bruit généré par les pales. Ce bruit peut être problématique lors des phases d'approche et d'atterrissage en raison de la proximité de zones habitées. En outre, des normes de certification acoustique contraignantes imposent des niveaux sonores que doivent respecter les aéronefs à voilures tournantes.

Pour une sélection prédéterminée de profils aérodynamiques, les caractéristiques géométriques d'une pale influençant les performances aérodynamiques de la pale lors des vols d'avancement à des vitesses élevées et des vols stationnaires ainsi que la signature acoustique de la pale sont notamment la corde des profils aérodynamiques des sections de la pale, la flèche et le vrillage de la pale.

On rappelle que la corde est la distance entre le bord d'attaque et le bord de fuite des profils des sections de la pale. Cette corde peut varier le long de l'envergure de la pale. On parle d'« effilement » pour désigner généralement une diminution des cordes le long de l'envergure de la pale, mais ce terme peut également désigner une augmentation de ces cordes le long de l'envergure de la pale.

La flèche peut être définie comme l'angle formé par le bord d'attaque de la pale avec un axe particulier de cette pale. Par convention, dans une zone en flèche avant, le bord d'attaque forme avec ledit axe de la pale un angle de flèche positif selon le sens de rotation du rotor alors que dans une zone en flèche arrière ce bord d'attaque forme un angle de flèche négatif avec ledit axe de la pale. Ledit axe de la pale est généralement confondu avec l'axe de pas de la pale.

Le vrillage d'une pale consiste à faire varier le calage des profils des sections de la pale le long de l'envergure de la pale. On entend par « calage » l'angle formé entre la corde de chaque profil des sections de la pale avec un plan de référence de cette pale, cet angle étant désigné par « angle de vrillage ». Ce plan de référence est par exemple le plan perpendiculaire à l'axe de rotation de la pale et comportant ledit axe de la pale.

On appelle « loi de vrillage » l'évolution des angles de vrillage selon l'envergure de la pale. De manière conventionnelle, le vrillage est mesuré négativement lorsque le bord d'attaque d'un profil d'une section de la pale est abaissé par rapport audit plan de référence.

On connait des solutions efficaces pour améliorer indépendamment les performances d'une pale pour des vols d'avancement à vitesses élevées et celles d'une pale pour des vols stationnaires ainsi que les performances acoustiques de la pale lors des phases d'approche.

Par exemple, l'amélioration des performances aérodynamiques d'une pale en vol stationnaire se caractérise par la réduction de la puissance consommée par cette pale à iso-portance du rotor. Cette amélioration peut être obtenue par des modifications géométriques passives de la pale, et en particulier en augmentant son vrillage.

Une augmentation adéquate du vrillage de la pale permet de répartir la portance de façon plus uniforme sur toute la surface de la pale et, par suite du rotor, et de réduire ainsi la puissance absorbée par chaque pale du rotor en vol stationnaire. On rappelle que l'augmentation du vrillage consiste en fait à abaisser le bord d'attaque par rapport audit plan de référence et cela d'autant plus vers le bout de pale que vers le début de pale en raison de l'évolution de la vitesse circonférentielle de l'écoulement de l'air en fonction de l'envergure. Les performances aérodynamiques de la pale en vol stationnaire sont notamment augmentées en homogénéisant ainsi les vitesses induites le long de l'envergure de la pale.

Cependant, un fort vrillage de la pale peut amener le bout de pale à porter négativement, c'est-à-dire à générer une déportance qui est en fait une force de portance orientée selon la direction de la pesanteur, pour une pale dans une position azimutale dite « pale avançante » par l'homme du métier lorsque l'aéronef à voilure tournante se déplace à grande vitesse. Les performances aérodynamiques de la pale sont alors dégradées en vol d'avancement. De plus, les niveaux de charges aérodynamiques subies par la pale ainsi que les vibrations sont également fortement augmentés en vol d'avancement.

L'ajout d'un dièdre en bout de pale permet également d'améliorer les performances aérodynamiques de la pale en vol stationnaire. Un dièdre est formé par une surface de pale en bout de pale qui est orientée vers le haut ou vers le bas. Ce dièdre permet de réduire l'influence du tourbillon marginal généré par une pale sur les pales suivantes du rotor en vol stationnaire. Néanmoins, ce dièdre peut s'accompagner d'une baisse des performances aérodynamiques de la pale en vol d'avancement ainsi que d'une augmentation des vibrations.

En outre, l'amélioration des performances aérodynamiques d'une pale en vol d'avancement se caractérise par la réduction de la puissance consommée par chaque pale du rotor pour une portance et une vitesse d'avancement données. Cette amélioration peut être obtenue par des modifications géométriques passives de la pale, et en particulier en modifiant sa corde le long de l'envergure de la pale et/ou en diminuant son vrillage.

Par exemple, la corde des profils des sections de la pale augmente depuis le début de pale le long de l'envergure, puis diminue avant atteindre le bout de pale. On parle alors de « double effilement » de la pale. Le document EP 0842846 décrit une pale à double effilement dont la corde maximum est située à une distance comprise entre 60% et 90% de l'envergure totale de la pale de l'axe de rotation de la pale.

Cependant, l'utilisation d'un double effilement sur une pale se traduit souvent par une augmentation du bruit en vol d'approche suite à l'augmentation de l'intensité tourbillonnaire émise, puis impactée par chaque pale. L'utilisation de ce double effilement se traduit également par des performances aérodynamiques en vol stationnaire dégradées par rapport à une pale de même vrillage et de même solidité aérodynamique, ce terme désignant le rapport entre la surface totale des pales du rotor vues de dessus et la surface du disque rotor qui est la surface décrite par une pale de ce rotor pendant une rotation de un tour.

Par ailleurs et conformément au propos précité, une diminution du vrillage de la pale induit une augmentation des incidences aérodynamiques en bout de pale côté pale avançante. Les incidences pour un bout de pale dévrillée sont donc plus proches de zéro côté pale avançante ce qui permet d'une part de réduire la déportance de ce bout de pale côté pale avançante et d'autre part de réduire la traînée locale en particulier celle liée à l'apparition d'ondes de choc.

Par contre, une diminution du vrillage de l'extrémité de la pale s'accompagne d'une réduction de la marge au décrochage de la pale côté pale reculante. De plus, cette diminution du vrillage de la pale n'est pas favorable au vol stationnaire comme évoqué précédemment.

Les documents US 7252479 et EP 0565413 décrivent une pale adaptée pour les vols d'avancement à hautes vitesses combinant un double effilement de la pale et une loi de vrillage.

Enfin, l'amélioration des performances acoustiques d'une pale en vol d'approche peut se caractériser par la réduction du bruit généré par l'interaction entre la pale et le tourbillon d'air généré par les pales précédentes du rotor. Cette amélioration peut être obtenue par des modifications géométriques passives de la pale, et en particulier en modifiant sa flèche le long de l'envergure.

Par exemple, comme décrit dans les documents EP 1557354, US 2012/0251326 et US 6116857, une pale avec une première zone en flèche avant et une seconde zone en flèche arrière évite que le bord d'attaque de la pale ne soit parallèle à la ligne des tourbillons émis par les pales précédentes sur ces première et seconde zones. Une telle pale permet ainsi de limiter les interactions entre cette pale et ces tourbillons en diminuant par exemple l'intensité du bruit impulsif liée à l'interaction entre la pale et ces tourbillons et, par suite, de limiter l'apparition de bruits.

En outre, cette pale à double flèche peut également comporter un effilement sur la seconde zone en flèche arrière qui permet également de réduite le niveau de bruit généré en vol. En effet, pour un profil donné, l'épaisseur de la pale est d'autant plus faible que la corde est courte, ce qui diminue l'apparition du bruit dit « d'épaisseur ». De même, la surface de la pale étant réduite suite à son effilement, la portance est aussi modifiée, ce qui peut diminuer l'apparition du bruit dit « de charge ».

Il est également possible d'intervenir sur la charge aérodynamique en bout de pale afin de modifier les tourbillons émis dans le sillage de la pale et, par suite, de réduire le niveau sonore de la pale. Dans ce but, on modifie les lois de variation du vrillage et des cordes des profils des sections de la pale. Cependant de telles variations sont incompatibles avec les optimisations précédemment évoquées dans le cadre de vols stationnaires ou d'avancement.

Par ailleurs, il est également possible, indépendamment de la géométrie de la pale, de modifier le régime de rotation de la pale ou bien d'adopter des trajectoires d'approche spécifiques de l'aéronef désignées « trajectoires d'approche à moindre bruit » afin de réduire le bruit rayonné au sol par les pales de l'aéronef.

Toutefois, une modification du régime de rotation de la pale rend le travail d'équilibrage dynamique de la pale plus complexe. De plus, une diminution du régime de rotation de la pale peut notamment générer une augmentation des décrochages aérodynamiques en extrémité de pale et, par suite, une augmentation des efforts de commande dynamique de la pale.

Il est également possible de combiner l'application d'une double flèche avec des variations des cordes des profils des sections de la pale et une loi de vrillage adaptées soit au vol stationnaire ou bien au vol d'avancement. Ainsi, les documents EP1557354 et US 2012/0251326 décrivent des pales adaptées pour le vol stationnaire tout en permettant de réduire le bruit généré au cours des vols d'approche. De même, on connait le document EP0842846 qui décrit une pale adaptée pour le vol d'avancement à hautes vitesses et permet de limiter le bruit en vols d'approche.

Toutefois, les performances aérodynamiques de telles pales ne sont pas optimisées pour la phase de vol à laquelle les pales sont adaptées. En effet, la réduction de façon significative du bruit émis par la pale est dans tous les cas privilégiée et les performances aérodynamiques de la pale peuvent être dégradées dans certaines phases de vol. Cette dégradation est notamment due à un manque de raideur en torsion et/ou en flexion de la pale qui peut alors se déformer sous les efforts aérodynamiques et inertiels subis par la pale.

Par contre, l'optimisation des profils de la pale pour les vols d'avancement à hautes vitesses est différente et semble antagoniste avec l'optimisation de ces profils pour les vols stationnaires. Une optimisation des profils commune aux vols stationnaires et d'avancement à hautes vitesses est particulièrement complexe à définir, les conditions aérodynamiques rencontrées par la pale étant différentes. De plus, la position de la pale qui est, lors de la rotation du rotor, alternativement avançante et reculante vis-à-vis du flux d'air, augmente les différences entre ces conditions aérodynamiques rencontrées par la pale.

Enfin, le document intitulé « Multiobjective-Multipoint Rotor Blade Optimization in Forward Flight Conditions Using Surrogate-Assisted Memetic Algorithms », présenté à l'« European Rotorcraft Forum » à Gallarate (Italie) en septembre 2011 compare plusieurs méthodes d'optimisation d'une pale en vol d'avancement. Cette pale peut comporter uniquement une loi de vrillage, présenter une combinaison des lois de variation des cordes et de la flèche ou bien présenter une combinaison des lois de variation du vrillage, des cordes et de la flèche.

La présente invention a pour but de s'affranchir des limitations mentionnées ci-dessus et de proposer une pale améliorant les performances aérodynamiques de la pale tout en réduisant le bruit émis par la pale lors d'un vol d'approche. L'invention concerne également un rotor destiné à un aéronef à voilure tournante comportant au moins deux telles pales.

La présente invention a alors pour objet une pale pour un rotor d'aéronef à voilure tournante destinée à être en rotation autour d'un axe de rotation $A$, la pale s'étendant d'une part selon un axe de pale $B$ entre un début de pale apte à être relié à un moyeu du rotor et un bout de pale situé à une extrémité libre de la pale et d'autre part selon un axe transversal $T$ sensiblement perpendiculaire à l'axe de pale B entre un bord d'attaque et un bord de fuite, la pale comportant une partie profilée située entre le début de pale et le bout de pale, la partie profilée étant constituée par une succession de profils aérodynamiques, chaque profil aérodynamique étant situé dans un plan transversal sensiblement perpendiculaire à l'axe de pale $B$, chaque profil délimitant une section de la pale, le bout de pale étant situé à une distance de référence égale à un rayon rotor $R$ de l'axe de rotation $A$, une distance maximale entre le bord d'attaque et le bord de fuite dans ce plan transversal constituant une corde $c$ pour le profil aérodynamique de la pale, une corde moyenne $\bar{c}$ étant une valeur moyenne de la corde $c$ sur la partie profilée, un premier sens vers l'avant étant défini du bord de fuite vers le bord d'attaque et un second sens vers l'arrière étant défini du bord d'attaque vers le bord de fuite.

La corde moyenne $\bar{c}$ est de préférence définie par une pondération en carré du rayon r de chaque profil des sections de la pale selon la formule

$$\bar{c} = \frac{\int_{R_0}^{R} L(r).r^2.dr}{\int_{R_0}^{R} r^2.dr},$$

*L(r)* étant la longueur de la corde locale d'un profil de la pale situé à un rayon r de l'axe de rotation A, $R_0$ étant le rayon du début de la partie profilée et *R* le rayon du bout de pale.

Toutefois, la corde moyenne $\bar{c}$ peut être définie par une moyenne arithmétique des cordes *c* des sections de la pale sur l'ensemble de la partie profilée de la pale.

Cette pale selon l'invention présente une combinaison des lois de variation des cordes et de la flèche, la corde augmentant entre le début de la partie profilée et une première section *S1* située à une première distance de l'axe de rotation *A* comprise entre 0.6R et 0.9R, la corde diminuant au-delà de la première section *S1*, la flèche de la pale étant tout d'abord dirigée vers l'avant de la pale entre le début de la partie profilée et une deuxième section *S2* située à une deuxième distance de l'axe de rotation *A* comprise entre 0.5R et 0.8R, le bord d'attaque formant un premier angle de flèche avant compris entre 0° et 10° avec l'axe de pale *B*, la flèche étant ensuite dirigée vers l'avant de la pale entre la deuxième section *S2* et une troisième section *S3* située à une troisième distance de l'axe de rotation *A* comprise entre 0.6R et 0.95R, le bord d'attaque formant un deuxième angle de flèche avant compris entre 1° et 15° avec l'axe de pale *B*, la flèche étant enfin dirigée vers l'arrière de la pale entre la troisième section *S3* et le bout de pale, le bord d'attaque formant un troisième angle de flèche arrière compris entre -35° et -15° avec l'axe de pale *B*.

Cette pale selon l'invention est destinée de préférence au rotor principal de sustentation voire de propulsion d'un aéronef à voilure tournante. L'axe de rotation *A* de la pale correspond à l'axe de rotation du moyeu du rotor.

La partie profilée de la pale assure l'essentiel de la portance de la pale lors de la rotation de la pale autour de l'axe *A*. Le début de cette partie profilée est notamment caractérisé par un bord de fuite mince, alors qu'entre le début de pale et le début de cette partie profilée, le bord de fuite est épais, voire arrondi. Le début de cette partie profilée est donc généralement distinct du début de pale et situé entre le début de pale et le bout de pale, à proximité du début de pale.

Le bout de pale est situé à une distance de référence égale au rayon rotor R de l'axe de rotation *A*, et ce rayon rotor *R* est utilisée pour localiser un profil ou bien une section de la pale selon l'axe de pale *B*. Par exemple, le début de pale est situé à une quatrième distance comprise entre 0.05R et 0.3R de l'axe de rotation *A* et le début de la partie profilée de la pale est situé à une cinquième distance comprise entre 0.1R et 0.4R de l'axe de rotation *A*. La cinquième distance est supérieure ou égale à la quatrième distance.

De même, on utilise la corde moyenne $\bar{c}$ de la pale sur la partie profilée pour définir la corde de chaque profil de la pale le long de son envergure.

La loi de variation de la flèche définit ainsi une pale avec une triple flèche qui permet avantageusement d'améliorer la signature acoustique de la pale. De préférence, le premier angle de flèche avant est strictement supérieur à 0°.

Cette triple flèche évite avantageusement que le bord d'attaque de la pale ne soit parallèle aux tourbillons émis par les pales précédentes lors de la rotation d'une pale. Cette triple flèche permet ainsi une réduction de l'intensité de l'énergie acoustique générée par l'interaction entre la pale et les tourbillons d'air émis par les pales précédentes du rotor sur une partie de l'envergure de la pale, notamment lors d'un vol d'approche.

En outre, les extrémités des pales précédentes émettent des tourbillons formant des lignes de tourbillons de forme hélicoïdale. Il est alors intéressant de limiter les portions en envergure du bord d'attaque de la pale qui sont simultanément en interaction avec ces lignes de tourbillons afin de limiter l'effet du bruit généré sur l'oreille humaine.

En effet, avec un bord d'attaque de la pale avec un angle de flèche évolutif de façon continue sur une ou plusieurs des zones délimitées par les deuxième et troisième sections *S2,S3* ainsi que par le bout de pale, l'interaction entre ce bord d'attaque et les tourbillons émis par les pales précédant une pale suivante se produit simultanément sur plusieurs points de ce bord d'attaque et entraîne l'apparition d'une énergie acoustique. Il en résulte l'émission d'un son impulsif et gênant pour l'oreille humaine, ce phénomène étant pénalisant pour la certification acoustique.

Avantageusement, avec un bord d'attaque de la pale rectiligne et incliné vis-à-vis de l'axe de pale sur chaque zone délimitée par les deuxième et troisième sections *S2,S3* ainsi que par le bout de pale, l'interaction entre le bord d'attaque et ces tourbillons se produit simultanément sur un nombre réduits de points du bord d'attaque. Il en résulte la diminution de l'impulsivité du signal émis qui est alors moins gênant pour l'oreille humaine.

En conséquence, le bord d'attaque de la pale est de préférence rectiligne et incliné sur chaque zone délimitée par les deuxième et troisième sections *S2,S3* ainsi que par le bout de pale afin de réduire l'énergie acoustique perçue par un observateur.

La flèche est donc formée de préférence par un premier angle de flèche avant, un deuxième angle de flèche avant et un troisième angle de flèche arrière qui sont constants respectivement entre le début de la partie profilée et la deuxième section *S2*, puis entre la deuxième section *S2* et la troisième section *S3* et enfin entre la troisième section *S3* et le bout de pale.

Le premier angle de flèche avant $\alpha_1$ est différent du deuxième angle de flèche avant $\alpha_2$ afin de garantir la présence de trois flèches distinctes sur la pale selon l'invention.

En outre, le premier angle de flèche avant $\alpha_1$ est strictement inférieur au deuxième angle de flèche

avant $\alpha_2$ afin de garantir une progressivité sur les deux zones en flèche avant.

La pale selon l'invention est remarquable en ce que le premier angle de flèche avant est égal à 4°, le deuxième angle de flèche avant à 8° et le troisième angle de flèche arrière à -23°.

Selon la loi de variation des cordes des profils des sections de la pale, cette corde varie autour de la corde moyenne $\bar{c}$ de +/-40% entre le début de la partie profilée et la première section $S1$. La corde varie donc de $0.6\bar{c}$ à $1.4\bar{c}$ respectivement depuis le début de la partie profilée jusqu'à la première section $S1$. La variation des cordes peut également être plus faible entre le début de la partie profilée et la première section $S1$, afin notamment de moins pénaliser les performances aérodynamiques de la pale lors d'un vol stationnaire. La corde varie par exemple de +/-20% autour de la corde moyenne $\bar{c}$ entre le début de la partie profilée et la première section $S1$.

En outre, la corde des profils des sections de la pale est de préférence inférieure à la corde moyenne $\bar{c}$ sur une première partie de la pale, par exemple entre le début de la partie profilée de la pale et une quatrième section $S4$ située à une sixième distance de l'axe de rotation $A$ comprise entre 0.5R et 0.8R. La corde des profils des sections de la pale est ensuite supérieure à cette corde moyenne $\bar{c}$ entre cette quatrième section $S4$ et une cinquième section $S5$ située à une septième distance de l'axe de rotation $A$ comprise entre 0.85R et 0.95R, puis inférieure à cette corde moyenne $\bar{c}$ au-delà de cette cinquième section $S5$ et jusqu'au bout de pale. Par exemple, la corde du profil de la section de la pale au niveau du début de la partie profilée de la pale est comprise entre $0.4\bar{c}$ et $0.9\bar{c}$ alors que la corde du profil de la section de la pale en bout de pale peut être comprise entre $0.2\bar{c}$ et $0.8\bar{c}$.

Par ailleurs, la corde peut diminuer de façon non linéaire au delà d'une sixième section $S6$ jusqu'au bout de pale, cette sixième section $S6$ étant située à une huitième distance de l'axe de rotation $A$ comprise entre $0.9R$ et $0.95R$. De préférence, la corde des profils des sections de la pale diminue selon une courbe sensiblement parabolique au delà de la sixième section $S6$. On parle alors généralement de « saumon parabolique » présent en bout de pale. D'autres formes non linéaires sont également possibles pour ce bout de pale selon des courbes polynomiales telles qu'une courbe de Bézier.

Dans ce cas, la corde du profil de la section en bout de pale est comprise entre $0.2c_1$ et $0.8c_1$, $c_1$ étant la valeur de la corde du profil de la section de la pale au niveau de la sixième section $S6$, c'est-à-dire au début de cette zone de diminution non linéaire de la corde des profils des sections de la pale. De préférence, la corde en bout de pale est égale à $0.3c_1$.

La combinaison de ces lois de variation de la flèche et des cordes des profils des sections de la pale permet ainsi d'améliorer les performances aérodynamiques en vol d'avancement tout en réduisant les bruits émis par la pale, notamment lors de vols d'approche.

De plus, la pale peut combiner avec les lois de variation des cordes et de la flèche une loi de vrillage. Selon cette loi de vrillage, le vrillage des profils des sections de la pale est décroissant entre une septième section $S7$ située à une neuvième distance de l'axe de rotation $A$ comprise entre 0.3R et 0.4R et le bout de pale, un premier gradient du vrillage étant compris entre -25°/R et -4°/R entre la septième section $S7$ et une huitième section $S8$ située à une dixième distance de l'axe de rotation $A$ comprise entre 0.4R et 0.6R, un deuxième gradient du vrillage étant compris entre -25°/R et -4°/R entre la huitième section $S8$ et une neuvième section $S9$ située à une onzième distance de l'axe de rotation $A$ comprise entre 0.65R et 0.85R, un troisième gradient du vrillage étant compris entre -16°/R et -4°/R entre la neuvième section $S9$ et une dixième section $S10$ située à une douzième distance de l'axe de rotation $A$ comprise entre 0.85R et 0.95R, un quatrième gradient du vrillage étant compris entre -16°/R et 0°/R entre la dixième section $S10$ et le bout de pale.

Avantageusement, la combinaison des lois de variation des cordes et de la flèche des profils des sections de la pale avec cette loi de vrillage permet d'améliorer les performances aérodynamiques de la pale principalement en vol stationnaire sans dégrader d'une part les performances aérodynamiques de la pale en vol d'avancement et d'autre part le bruit généré par la pale lors de vols d'approche.

En effet, le vrillage est important dans une première zone de la pale, par exemple entre $0.3R$ et $0.7R$, et permet ainsi de compenser la faible corde qui est essentiellement inférieure à la corde moyenne $\bar{c}$. De plus, le dévrillage dans une deuxième zone de la pale, par exemple entre $0.7R$ et $0.9R$, est favorable au vol d'avancement pour une pale avançante, mais génère une augmentation des efforts sur une pale reculante. Avantageusement, sur cette deuxième zone, la corde des profils des sections de la pale est essentiellement supérieure à la corde moyenne $\bar{c}$ et permet ainsi de supporter ces efforts augmentés sans dégrader le comportement aérodynamique de la pale reculante.

Cette loi de variation du vrillage de la pale peut être linéaire par morceaux, c'est-à-dire entre deux sections adjacentes parmi les sections $S7, S8, S9, S10$ et entre la dixième section $S10$ et le bout de pale ou bien non linéaire sur l'ensemble de la partie profilée de la pale.

Dans le cas où la loi de vrillage est linéaire par morceaux, cette loi de vrillage est constituée par des segments de droites, une segment caractérisant la variation de vrillage entre deux sections adjacentes parmi les sections $S7, S8, S9, S10$ et entre la dixième section $S10$ et le bout de pale. Le gradient de vrillage, qui est la dérivée locale du vrillage le long de l'envergure de la pale, correspond alors au coefficient directeur des droites supportant ces segments. Ce gradient de vrillage est alors formé par des droites horizontales discontinues, une droite étant située entre les sections adjacentes et entre la dixième section *S10* et le bout de pale.

De plus, afin de permettre une variation du vrillage compatible aussi bien avec un vol stationnaire qu'avec un vol d'avancement et avec la loi de variation des cordes, le premier gradient du vrillage situé entre la septième section *S7* et la huitième section *S8* est de préférence inférieur au deuxième gradient du vrillage situé entre la huitième section *S8* et la neuvième section *S9*, le deuxième gradient du vrillage est de préférence supérieur au troisième gradient du vrillage situé entre la neuvième section *S9* et la dixième section *S10* et le troisième gradient du vrillage est de préférence inférieur au quatrième gradient du vrillage situé entre la dixième section *S10* et bout de pale.

Dans le cas où cette loi de vrillage est non linéaire, sur la partie profilée, le gradient de vrillage est de préférence une courbe continue sur l'ensemble de la partie profilée de la pale. Le premier gradient du vrillage atteint alors un premier palier compris entre - 25°/*R* et -15°/*R* au niveau de la huitième section *S8*, le deuxième gradient du vrillage atteint un deuxième palier compris entre -14°/*R* et -4°/*R* au niveau de la neuvième section *S9*, le troisième gradient du vrillage atteint un troisième palier compris entre -16°/*R* et -6°/*R* au niveau de la dixième section *S10* et le quatrième gradient du vrillage est compris entre -10°/*R* et 0°/*R* au niveau du bout de pale.

Cette loi de vrillage peut correspondre à une courbe polynomiale par exemple une courbe de Bézier d'ordre 6 ou supérieur.

De préférence, le premier palier est égal à -18°/*R*, le deuxième palier à -6°/*R*, le troisième palier à -13°/*R* et le quatrième gradient du vrillage est égal à -8°/*R* au niveau du bout de pale.

Quelle que soit la loi de variation du vrillage, la neuvième distance est par exemple égale à 0.35*R*, la dixième distance à 0.48*R*, la onzième distance à 0.78*R* et la douzième distance à 0.92R.

La loi de vrillage définit uniquement la variation du vrillage de la pale entre le début de la partie profilée et le bout de pale, mais elle ne définit pas le calage des profils des sections de la pale. Le calage des profils des sections de la pale au niveau du début de la partie profilée n'a pas d'influence directe sur le comportement aérodynamique de la pale. En effet, le calage des profils des sections de la pale au niveau du début de la partie profilée et de l'ensemble des profils de la pale le long de la partie profilée dépend au cours du vol du réglage du pas collectif et de celui du pas cyclique de la pale. C'est donc bien la variation du vrillage qui caractérise le comportement aérodynamique de la pale la valeur du calage des profils des sections de la pale étant pris en compte dans le réglage du pas collectif et de celui du pas cyclique de la pale.

En outre, les zones de la pale situées à proximité de cet axe de rotation *A* et notamment la zone située entre l'axe de rotation *A* et la huitième section *S8* sont peu sollicitées par les forces aérodynamiques lors de la rotation de la pale. Le vrillage à proximité de cet axe de rotation *A* a donc peu d'influence sur le comportement aérodynamique de la pale. De la sorte, le vrillage peut être sensiblement constant ou bien varier faiblement entre le début de la partie profilée et la huitième section *S8* sans modifier significativement le comportement et les performances aérodynamiques de la pale. La variation du vrillage est par exemple inférieure ou égale à 2° entre le début de la partie profilée et la huitième section *S8*.

En outre, la pale peut comporter un dièdre commençant au niveau de la sixième section *S6* et se terminant au bout de pale. Ce dièdre est de préférence orienté vers le bas et permet d'améliorer les performances aérodynamiques de la pale en vol stationnaire.

La présente invention a aussi pour objet un rotor destiné à un aéronef à voilure tournante. Ce rotor comporte au moins deux pales telles que précédemment décrites. Ce rotor est plus particulièrement destiné à être un rotor principal de sustentation voire de propulsion d'un aéronef à voilure tournante.

L'invention et ses avantages apparaîtront avec plus de détails dans le cadre de la description qui suit avec des exemples de réalisation donnés à titre illustratif en référence aux figures annexées qui représentent :

- les figures 1 et 2, une pale selon l'invention,
- la figure 3, un aéronef muni d'un rotor formé par de telles pales,
- la figure 4, une courbe de variation des cordes des profils des sections de la pale,
- la figure 5, une courbe de variation de la flèche de la pale,
- la figure 6, une courbe de variation du vrillage de la pale, et
- la figure 7, une courbe de variation du gradient de vrillage de la pale.

Les éléments présents dans plusieurs figures distinctes sont affectés d'une seule et même référence.

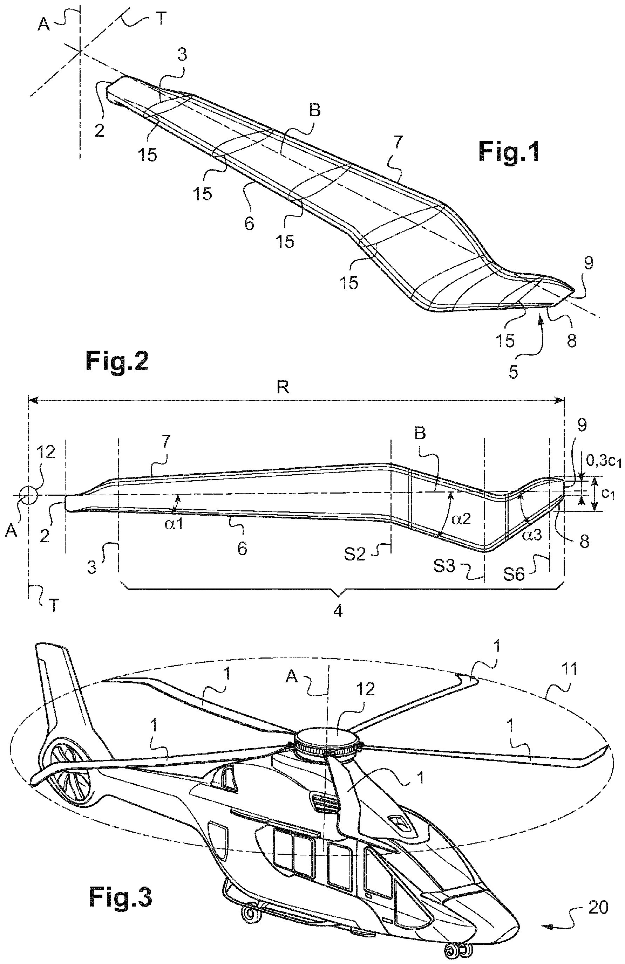

Les figures 1 et 2 représentent une pale 1 s'étendant d'une part en envergure selon un axe de pale *B* entre un début de pale 2 et un bout de pale 9 et d'autre part selon un axe transversal *T* perpendiculaire à l'axe de pale *B* entre un bord d'attaque 6 et un bord de fuite 7. La pale 1 comporte une partie profilée 4 située entre le début de pale 2 et le bout de pale 9. La partie profilée 4 est constituée par une succession de profils aérodynamiques 15 situés dans un plan transversal sensiblement perpendiculaire à l'axe de pale *B*, chaque profil délimitant une section de la pale 1. La pale 1 comporte également un dièdre 5 à l'extrémité libre de cette pale 1, c'est-à-dire au niveau du bout de pale 9.

La pale 1 est destinée à former un rotor 11 d'aéronef 10 à voilure tournante comme représenté sur la figure 3. Ce rotor 11 comporte un moyeu 12 et cinq pales 1 destinées à être en rotation autour d'un axe de rotation *A* du moyeu 12. Chaque pale 1 est reliée au moyeu 12 au niveau du début de pale 2.

Le rotor 11 est caractérisé par le rayon rotor *R*, c'est-à-dire la distance entre l'axe de rotation *A* et le bout de pale 9 selon l'axe de pale *B*. La corde *c* des profils 15 des sections de la pale 1 correspond à la distance maximale entre le bord d'attaque 6 et le bord de fuite 7 de cette pale 1 dans un plan transversal sensiblement perpendiculaire à l'axe de pale *B*. Une corde moyenne $\bar{c}$ est définie en tant que valeur moyenne de la corde *c* sur la partie profilée 4. Le début de pale 2 est situé à une quatrième distance égale à 0.1*R* de l'axe de rotation *A* et le début 3 de la partie profilée 4 de la pale 1 est situé à une cinquième distance égale à 0.2*R* de l'axe de rotation *A*.

La pale 1 selon l'invention présente une combinaison des lois de variation de sa flèche et des cordes des profils 15 de la pale 1 afin d'une part de réduire le bruit émis par chaque pale 1 du rotor 11 lors d'un vol d'approche et d'autre part d'améliorer les performances aérodynamiques de chaque pale 1 en vol d'avancement de l'aéronef 10.

Par ailleurs, la pale 1 peut également présenter une combinaison des lois de variation de la flèche et des cordes des profils 15 des sections de la pale 1 avec une loi de variation du vrillage afin d'une part de réduire le bruit émis par chaque pale 1 du rotor 11 lors d'un vol d'approche et d'autre part d'améliorer les performances aérodynamiques de chaque pale 1 aussi bien lors d'un vol stationnaire que d'un vol d'avancement de l'aéronef 10.

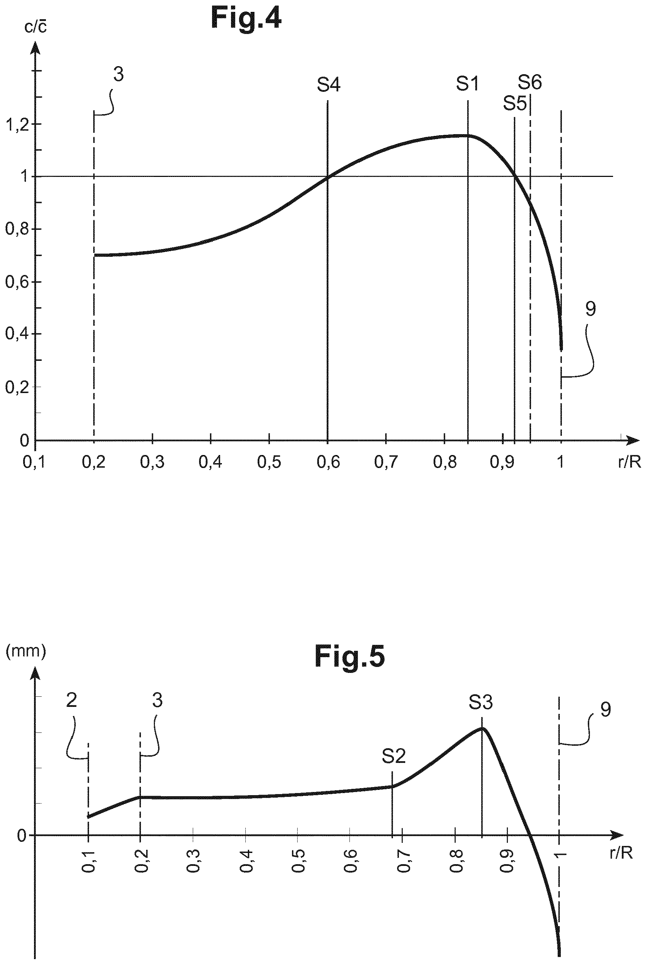

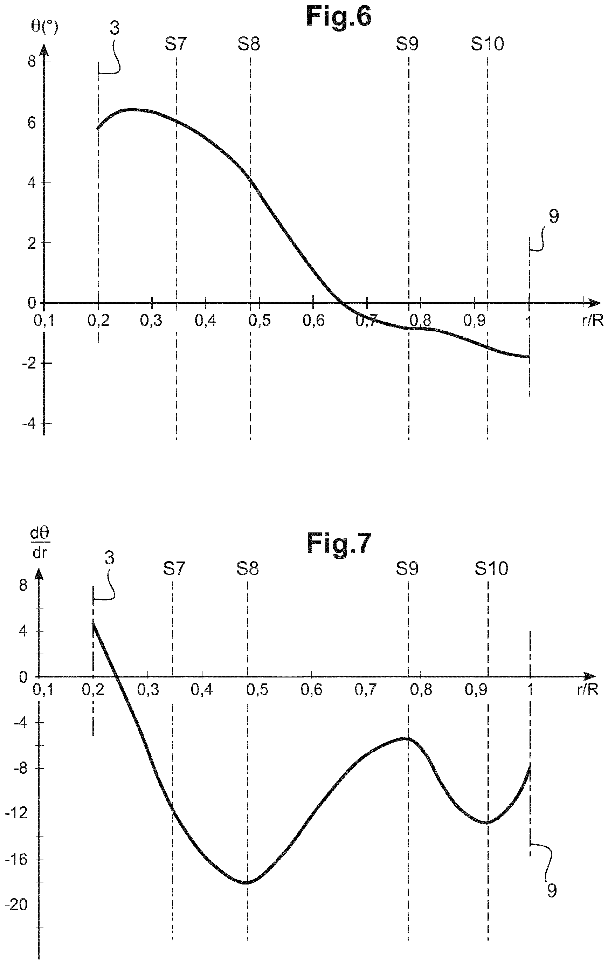

Les lois de variation des cordes, de la flèche et du vrillage des profils 15 des sections de la pale 1 sont représentées respectivement sur les figures 4 à 6. La figure 7 représente le gradient de vrillage de la pale 1 qui est la dérivée locale du vrillage le long de l'envergure de la pale 1 du rotor 11 de rayon rotor R.

La loi de variation des cordes des profils 15 des sections de la pale 1 représentée sur la figure 4 comporte en abscisse le rapport de la position des profils 15 des sections de la pale 1 selon l'envergure de cette pale 1 par le rayon rotor *R* et en ordonnée le rapport de la corde *c* des profils 15 des sections de la pale 1 par la corde moyenne $\bar{c}$.

La corde moyenne $\bar{c}$ est définie par une pondération en carré du rayon r de chaque profil 15 des sections

$$\bar{c} = \frac{\int_{R_0}^{R} L(r).r^2.dr}{\int_{R_0}^{R} r^2.dr},$$

de la pale 1 selon la formule    *L(r)* étant la longueur de la corde locale d'un profil de la pale 1 située à un rayon r de l'axe de rotation *A, R_0* étant le rayon du début 3 de la partie profilée 4 et *R* le rayon du bout de pale 9.

Selon cette loi de variation des cordes, la corde *c* des profils 15 des sections de la pale 1 augmente entre le début 3 de la partie profilée 4 et une première section *S1* située à une première distance de l'axe de rotation *A* égale à 0.85R. Au-delà de la première section *S1*, la corde diminue jusqu'au bout de pale 9. On constate que la corde *c* est inférieure à la corde moyenne $\bar{c}$ entre le début de la partie profilée de la pale 1 et une quatrième section *S4* située à une sixième distance de l'axe de rotation *A* égale à 0.6*R*. De plus, la corde *c* varie entre le début 3 de la partie profilée 4 et la première section *S1* de 0.8$\bar{c}$ à 1.2$\bar{c}$ ce qui représente une variation de +/-20% autour de la corde moyenne $\bar{c}$. La corde en bout de pale est égale à 0.3$\bar{c}$.

Ensuite, la corde des profils 15 des sections de la pale 1 est supérieure à cette corde moyenne $\bar{c}$ entre cette quatrième section *S4* et une cinquième section *S5* située à une septième distance de l'axe de rotation *A* comprise entre 0.85*R* et 0.95*R*. Enfin, la corde des profils 15 des sections de la pale 1 est inférieure à cette corde moyenne $\bar{c}$ au-delà de cette cinquième section *S5* et jusqu'au bout de pale 9.

En outre, la corde c diminue selon une courbe parabolique au delà d'une sixième section *S6* située à une huitième distance égale 0.95R. L'extrémité de la pale 1 forme ainsi un saumon parabolique 8.

La loi de variation de la flèche de la pale 1 selon la figure 5 définit une triple flèche. Le rapport de la position des profils 15 des sections de la pale 1 selon l'axe de pale *B* par le rayon rotor *R* se trouve en abscisse et l'angle de flèche α de ces profils 15 se trouve en ordonnée.

Ainsi, la flèche est tout d'abord dirigée vers l'avant de la pale 1 entre le début 3 de la partie profilée 4 et une deuxième section *S2* située à une deuxième distance de l'axe de rotation *A* égale à 0.67*R*, le bord d'attaque 6 formant un premier angle de flèche avant $\alpha_1$ égal à 4° avec l'axe de pale *B*. Ensuite, la flèche est dirigée vers l'avant de la pale 1 entre la deuxième section *S2* et une troisième section *S3* située à une troisième distance de l'axe de rotation *A* égale à 0.85*R*, le bord d'attaque 6 formant un deuxième angle de flèche avant $\alpha_2$ égal à 8° avec l'axe de pale *B.* Enfin, la flèche est dirigée vers l'arrière de la pale 1 entre la troisième section *S3* et le bout de pale 9, le bord d'attaque 6 formant un troisième angle de flèche arrière $\alpha_3$ égal à -23° avec l'axe de pale *B.*

Les raccordements entre les premier, deuxième et troisième angles de flèche sont réalisés de préférence par un rayon de raccordement afin d'éviter d'avoir des angles vifs au niveau de chacun de ces raccordements. Ces rayons de raccordement sont par exemple de l'ordre de 500mm.

Par ailleurs, la pale 1 comporte le dièdre 5 à son extrémité libre orienté vers le bas. Ce dièdre 5 commence au niveau de la sixième section *S6* et se terminant au bout de pale 9. Ce dièdre 5 permet principalement d'améliorer les performances aérodynamiques de la pale 1 en vol stationnaire en réduisant l'influence du tourbillon généré par la pale précédente.

En outre, une loi de vrillage des profils 15 peut être ajoutée à cette pale 1 d'améliorer les performances aérodynamiques de la pale 1 aussi bien lors d'un vol stationnaire qu'en vol d'avancement. Cette loi de vrillage de la pale 1 représentée sur la figure 6 est une loi non linéaire correspondant à une courbe polynomiale. Le rapport de la position des profils 15 des sections de la pale 1 selon l'envergure par le rayon rotor *R* se trouve en abscisse et l'angle de vrillage *θ* de ces profils 15 des sections de la pale 1 se trouve en ordonnée.

Le gradient de vrillage est représenté sur la figure 7 et comporte en abscisse le rapport de la position des profils 15 des sections de la pale 1 selon l'envergure de la pale 1 par le rayon rotor R et en ordonnée la dérivée locale du vrillage du profil 15.

Tout d'abord, l'angle de vrillage *θ* varie faiblement entre le début 3 de la partie profilée 4 et une septième section *S7* située à une neuvième distance de l'axe de rotation *A* égale à 0.35*R*. La variation de l'angle de vrillage *θ* est inférieure à 2° entre le début 3 de la partie profilée 4 et la septième section *57*. L'angle de vrillage *θ* augmente légèrement puis diminue selon l'envergure, le gradient de vrillage étant positif au niveau du début 3 de la partie profilée 4 et décroissant pour être négatif au niveau de la septième section *57*.

L'angle de vrillage *θ* décroit ensuite entre la septième section *S7* et une huitième section *S8* située à une dixième distance de l'axe de rotation *A* égale à 0.48*R*, le gradient du vrillage décroissant jusqu'à un premier palier égal à -18°/*R* au niveau de la huitième section *S8*.

L'angle de vrillage *θ* décroit ensuite moins entre la huitième section *S8* et une neuvième section *S9* située à une onzième distance de l'axe de rotation *A* égale à 0.78*R*, le gradient du vrillage augmentant jusqu'à un deuxième palier égal à -6°/*R* au niveau de la neuvième section *59*. L'angle de vrillage *θ* est notamment égal à 0° pour un profil 15 de la pale 1 situé à une distance de l'axe de rotation A égale à 0.65R.

L'angle de vrillage *θ* décroit de nouveau davantage entre la neuvième section *S9* et une dixième section *S10* située à une douzième distance de l'axe de rotation *A* égale à 0.92*R*, le gradient du vrillage décroissant jusqu'à un troisième palier égal à -13°/*R* au niveau de la dixième section *S10*.

Enfin, l'angle de vrillage *θ* décroit moins entre la dixième section *S10* et le bout de pale 9, le gradient du vrillage augmentant jusqu'à un gradient de vrillage égal -8°/*R* au niveau du bout de pale 9.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles, l'invention étant uniquement définie par l'énoncé des revendications qui suivent.

**Revendications**

1. Pale (1) pour rotor (11) d'aéronef (10) à voilure tournante destinée à être en rotation autour d'un axe de rotation (A), ladite pale (1) s'étendant d'une part selon un axe de pale (B) entre un début de pale (2) apte à être relié à un moyeu (12) dudit rotor (11) et un bout de pale (9) situé à une extrémité libre de ladite pale (1) et d'autre part selon un axe transversal (T) perpendiculaire audit axe de pale (B) entre un bord d'attaque (6) et un bord de fuite (7), ladite pale (1) comportant une partie profilée (4) située entre ledit début de pale (2) et ledit bout de pale (9), ladite partie profilée (4) étant constituée par une succession de profils aérodynamiques (15), chaque profil aérodynamique (15) étant situé dans un plan transversal sensiblement perpendiculaire audit axe de pale (B) et délimitant une section de ladite pale (1), ledit bout de pale (9) étant situé à une distance égale à un rayon rotor R dudit axe de rotation (A), une distance maximale entre ledit bord d'attaque (6) et ledit bord de fuite (7) dans ledit plan transversal constituant une corde *c* pour ledit profil aérodynamique (15) desdites sections de ladite pale (1), une corde moyenne *c̄* étant une valeur moyenne de ladite corde *c* sur ladite partie profilée (4), un premier sens vers l'avant étant défini dudit bord de fuite (7) vers ledit bord d'attaque (6) et un second sens vers l'arrière étant défini dudit bord d'attaque (6) vers ledit bord de fuite (7),

ladite pale (1) présentant une combinaison des lois de variation des cordes et de la flèche, ladite flèche étant l'angle entre ledit bord d'attaque et ledit axe de pale (B), ladite corde augmentant entre le début (3) de ladite partie profilée (4) et une première section *S1* située à une première distance dudit axe de rotation (A) comprise entre 0.6*R* et 0.9*R*, ladite corde diminuant au-delà de ladite première section *S1*, et ladite flèche étant dirigée vers l'avant de ladite pale (1) entre ledit début (3) de ladite partie profilée (4) et une deuxième section *S2* située à une deuxième distance dudit axe de rotation (A) comprise entre 0.5*R* et 0.8*R*, ledit bord d'attaque formant un premier angle de flèche avant $\alpha_1$ strictement supérieur à 0° et inférieur à 10° avec ledit axe de pale (B), ladite flèche étant dirigée vers l'avant de ladite pale (1) entre ladite deuxième section *S2* et une troisième section *S3* située à une troisième distance dudit axe de rotation (A) comprise entre 0.6R et 0.95R, ledit bord d'attaque formant un deuxième angle de flèche avant $\alpha_2$ compris entre 1° et 15° avec ledit axe de pale (B), ladite flèche étant dirigée vers l'arrière de ladite pale (1) entre ladite troisième section *S3* et ledit bout de pale (9), ledit bord d'attaque formant un troisième angle de flèche arrière $\alpha_3$ compris entre -35° et -15° avec ledit axe de pale (B),

**caractérisée en ce que** ledit premier angle de flèche avant $\alpha_1$ est égal à 4°, ledit deuxième angle de flèche avant $\alpha_2$ est égal à 8° et ledit troisième angle de flèche arrière $\alpha_3$ est égal à -23°.

2. Pale (1) selon la revendication 1, **caractérisée en ce que** ledit début de pale (2) est situé à une quatrième distance comprise entre 0.05*R* et 0.3*R* dudit axe de rotation (A) et ledit début (3) de la partie profilée (4) est situé à une cinquième distance comprise entre 0.1R et 0.4R dudit axe de rotation (A), ladite cinquième distance étant supérieure ou égale à ladite quatrième distance, ladite corde au niveau dudit début de pale (2) étant comprise entre $0.4\bar{c}$ et $0.9\bar{c}$.

3. Pale (1) selon l'une quelconque des revendications 1 à 2,
   **caractérisée en ce que** ladite corde varie autour de la dite corde moyenne $\bar{c}$ de +/-40% entre ledit début (3) de la partie profilée (4) et ladite première section *S1*.

4. Pale (1) selon l'une quelconque des revendications 1 à 3,
   **caractérisée en ce que** ladite corde diminue de façon non linéaire au delà d'une sixième section *S6* située à une huitième distance dudit axe de rotation (A) comprise entre 0.9R et 0.95R jusqu'audit bout de pale (9).

5. Pale (1) selon la revendication 4,
   **caractérisée en ce que** ladite corde diminue de façon parabolique au delà de ladite sixième section 56.

6. Pale (1) selon l'une quelconque des revendications 1 à 5,
   **caractérisée en ce que** ladite pale (1) comporte un dièdre au niveau dudit bout de pale (9).

7. Pale (1) selon l'une quelconque des revendications 1 à 6,
   **caractérisée en ce que** ladite corde moyenne $\bar{c}$ est définie par une pondération en carré du rayon r de chaque profil (15) desdites sections de ladite pale

   $$\bar{c} = \frac{\int_{R_0}^{R} L(r).r^2.dr}{\int_{R_0}^{R} r^2.dr},$$

   (1) selon la formule *L(r)* étant la longueur de ladite corde locale d'un profil (15) de ladite pale 1, ledit profil (15) local étant situé à un rayon r de l'axe de rotation *A*, $R_0$ étant le rayon dudit début (3) de ladite partie profilée (4) et *R* le rayon dudit bout de pale (9).

8. Rotor (11) destiné à un aéronef (10) à voilure tournante comportant au moins deux pales (1) selon l'une quelconque des revendications 1 à 7.

**Patentansprüche**

1. Blatt (1) für den Rotor (11) eines Drehflügelflugzeugs (10), das vorgesehen ist, um um eine Drehachse (A) gedreht zu werden, wobei sich das Blatt (1) einerseits entlang einer Blattachse (B) zwischen einem Blattanfang (2), der mit einer Nabe (12) des Rotors (11) verbindbar ist, und einem Blattende (9), das an einem freien Ende des Blattes (1) angeordnet ist, und andererseits entlang einer Querachse (T), die senkrecht zu der Blattachse (B) liegt, zwischen einer Vorderkante (6) und einer Hinterkante (7) erstreckt, wobei das Blatt (1) einen Profilabschnitt (4) umfasst, der zwischen dem Blattanfang (2) und dem Blattende (9) angeordnet ist, wobei der Profilabschnitt (4) aus einer Folge von aerodynamischen Profilen (15) besteht, wobei jedes aerodynamische Profil (15) in einer Querebene im Wesentlichen senkrecht zur Blattachse (B) angeordnet ist und einen Querschnitt des Blattes (1) begrenzt, wobei das Blattende (9) in einem Abstand von der Drehachse (A) angeordnet ist, der einem Rotorradius R entspricht, wobei ein maximaler Abstand zwischen der Vorderkante (6) und der Hinterkante (7) in der Querebene eine Sehne c für das aerodynamische Profil (15) der Querschnitte des Blattes (1) bildet, wobei eine durchschnittliche Sehne $\bar{c}$ ein Durchschnittswert der Sehne c auf dem Profilabschnitt (4) ist, wobei eine erste Vorwärtsrichtung von der Hinterkante (7) zur Vorderkante (6) und eine zweite Rückwärtsrichtung von der Vorderkante (6) zur Hinterkante (7) definiert ist,

   wobei das Blatt (1) eine Kombination der Variationsregeln der Sehnen und der Pfeilung aufweist, wobei die Pfeilung der Winkel zwischen der Vorderkante und der Blattachse (B) ist, wobei die Sehne zwischen dem Anfang (3) des Profilabschnitts (4) und einem ersten Querschnitt S1, der sich in einem ersten Abstand von der Drehachse (A) zwischen 0,6R und 0,9R befindet, ansteigt, wobei die Sehne jenseits des ersten Querschnitts S1 abnimmt, und
   wobei die Pfeilung zwischen dem Anfang (3) des Profilabschnitts (4) und einem zweiten Querschnitt S2, der sich in einem zweiten Abstand von der Drehachse (A) von zwischen 0,5R und 0,8R befindet, auf die Vorderseite des Blattes (1) gerichtet ist, wobei die Vorderkante mit der Blattachse (B) einen ersten vorderen Pfeilwinkel $\alpha_1$ von deutlich mehr als 0° und weniger als 10° bildet, wobei die Pfeilung zwischen dem zweiten Querschnitt 52 und einem dritten Querschnitt S3, der sich in einem dritten Abstand von der Drehachse (A) von zwischen 0,6R und 0,95R befindet, auf die Vorderseite des Blattes (1) gerichtet ist, wobei die Vorderkante mit der Blattachse (B) einen zweiten vorderen Pfeilwinkel $\alpha_2$ zwischen 1° und 15° bildet, wobei die Pfeilung zwischen dem dritten Querschnitt S3 und dem Blattende (9) zur Hinterseite des Blattes (1) gerichtet ist und die Vorderkante mit der Blattachse (B) einen dritten hinteren Pfeilwinkel $\alpha_3$ zwischen -35° und -15° bildet,
   **dadurch gekennzeichnet, dass** der erste vordere Pfeilwinkel $\alpha_1$ gleich 4° ist, der zweite vor-

dere Pfeilwinkel $\alpha_2$ gleich 8° ist und der dritte hintere Pfeilwinkel $\alpha_3$ gleich -23° ist.

2. Blatt (1) nach Anspruch 1,
   **dadurch gekennzeichnet, dass** der Blattanfang (2) in einem vierten Abstand zwischen 0,05R und 0,3R von der Drehachse (A) angeordnet ist und der Anfang (3) des Profilabschnitts (4) in einem fünften Abstand zwischen 0,1R und 0,4R von der Drehachse (A) angeordnet ist, wobei der fünfte Abstand größer als oder gleich dem vierten Abstand ist, und wobei die Sehne am Blattanfang (2) zwischen $0,4\overline{c}$ und $0,9\overline{c}$ liegt.

3. Blatt (1) nach einem der Ansprüche 1 bis 2,
   **dadurch gekennzeichnet, dass** die Sehne zwischen dem Anfang (3) des Profilabschnitts (4) und dem ersten Querschnitt S1 um +/-40% um die durchschnittliche Sehne $\overline{c}$ variiert.

4. Blatt (1) nach einem der Ansprüche 1 bis 3,
   **dadurch gekennzeichnet, dass** die Sehne jenseits eines sechsten Querschnitts S6, der sich in einem achten Abstand von der Drehachse (A) von zwischen 0,9R und 0,95R befindet, zum Blattende (9) nichtlinear abnimmt.

5. Blatt (1) nach Anspruch 4,
   **dadurch gekennzeichnet, dass** die Sehne jenseits des sechsten Abschnitts 56 parabolisch abnimmt.

6. Blatt (1) nach einem der Ansprüche 1 bis 5,
   **dadurch gekennzeichnet, dass** das Blatt (1) am Blattende (9) einen Dieder aufweist.

7. Blatt (1) nach einem der Ansprüche 1 bis 6,
   **dadurch gekennzeichnet, dass** die durchschnittliche Sehne $\overline{c}$ durch eine Gewichtung mit dem Quadrat des Radius r jedes Profils (15) der Querschnitte der Schaufel (1) gemäß folgender Formel definiert ist:

$$\overline{c} = \frac{\int_{R_0}^{R} L(r).r^2.dr}{\int_{R_0}^{R} r^2.dr},$$

wobei L(r) die Länge der lokalen Sehne eines Profils (15) des Blattes (1) ist, wobei das lokale Profil (15) sich bei einem Radius r von der Drehachse A befindet,
R_0 der Radius des Anfangs (3) des Profilabschnitts (4) und R der Radius des Blattendes (9) ist.

8. Rotor (11) für ein Drehflügelflugzeug (10) mit mindestens zwei Blättern (1) nach einem der Ansprüche 1 bis 7.

## Claims

1. Blade (1) for a rotor (11) of an aircraft (10) having a rotary wing designed to rotate about an axis of rotation (A), the said blade (1) extending on the one hand along a blade axis (B) between a blade start (2) capable of being connected to a hub (12) of the said rotor (11) and a blade tip (9) situated at a free end of the said blade (1), and on the other hand along a transverse axis (T) perpendicular to the said blade axis (B) between a leading edge (6) and a trailing edge (7), the said blade (1) comprising a profiled part (4) situated between the said blade start (2) and the said blade tip (9), the said profiled part (4) consisting of a succession of aerodynamic profiles (15), each aerodynamic profile (5) being situated in a transverse plane substantially perpendicular to the said blade axis (B) and demarcating a section of the said blade (1), the said blade tip (9) being located at a distance equal to a rotor radius $R$ of the said axis of rotation (A), a maximum distance between the said leading edge (6) and the said trailing edge (7) in the said transverse plane forming a chord $c$ for the said aerodynamic profile (15) of the said sections of the said blade (1), a mean chord $\overline{c}$ being a mean value of the said chord $c$ on the said profiled part (4), a first forward direction being defined from the said trailing edge (7) to the said leading edge (6) and a second rearward direction being defined from the said leading edge (6) to the said trailing edge (7),
   the said blade (1) presenting a combination of the laws of variation of chords and pitch, the said pitch being the angle between the said leading edge and the said blade axis (B), the said chord increasing between the start (3) of the said profiled part (4) and a first section $S1$ situated at a first distance from the said axis of rotation (A) between $0.6R$ and $0.9R$, the said chord increasing beyond the said first section $S1$, and the said pitch being directed in the forward direction of the said blade (1) between the said start (3) of the said profiled part (4) and a second section $S2$ situated at a second distance from the said axis of rotation (A) between $0.5R$ and $0.8R$, the said leading edge forming a first forward pitch angle $\alpha_1$ strictly greater than 0° and less than 10° with the said blade axis (B), the said pitch being directed in the forward direction of the said blade (1) between the said second section $S2$ and a third section S3 situated at a third distance from the said axis of rotation (A) between $0.6R$ and $0.95R$, the said leading edge forming a second front pitch angle $\alpha_2$ between 1° and 15° with the said blade axis (B), the said pitch being directed to the rear of the said blade (1) between the said third section $S3$ and the said blade tip (9), the said leading edge forming a third rear pitch angle $\alpha_3$ of between -35° and -15° with the said blade axis (B), **characterised in that** the said first forward pitch

angle $\alpha_1$ is equal to 4°, the said second forward pitch angle $\alpha_2$ is equal to 8°, and the said third rear pitch angle $\alpha_3$ is equal to -23°.

2. Blade (1) according to claim 1, **characterised in that** the said blade start (2) is situated at a fourth distance between $0.05R$ and $0.3R$ from the said axis of rotation (A) and the said start (3) of the profiled part (4) is situated at a fifth distance between $0.1R$ and $0.4R$ from the said axis of rotation (A), the said fifth distance being greater than or equal to the said fourth distance, the said chord at the said blade start (2) being between $0.4\bar{c}$ and $0.9\bar{c}$.

3. Blade (1) according to either one of claims 1 and 2, **characterised in that** the said chord varies around the said mean chord $\bar{c}$ by +/-40% between the said start (3) of the profiled part (4) and the said first section $S1$.

4. Blade (1) according to any one of claims 1 to 3, **characterised in that** the said chord decreases in a non-linear manner beyond a sixth section $S6$ situated at an eighth distance from the said axis of rotation (A) between $0.9R$ and $0.95R$ up to the said blade tip (9).

5. Blade (1) according to claim 4, **characterised in that** the said chord decreases in a parabolic manner beyond the said sixth section $S6$.

6. Blade (1) according to any one of claims 1 to 5, **characterised in that** the said blade (1) comprises a dihedron at the said blade start (9).

7. Blade (1) according to any one of claims 1 to 6, **characterised in that** the said mean chord $\bar{c}$ is defined by a squared weighting of the radius $r$ of each profile (15) of the said sections of the said blade (1) according to the formula $$\bar{c} = \frac{\int_{R_0}^{R} L(r) . r^2\, dr}{\int_{R_0}^{R} r^2\, dr},$$ $L(r)$, where L($r$) is the length of the said local chord from a profile (15) of the said blade (1), the said local profile (15) being situated at a radius r from the axis of rotation $A$, where $R_0$ is the radius of the said start (3) of the said profile part (4) and $R$ is the radius of the said blade start (9).

8. Rotor (11) designed for an aircraft (10) having a rotary wing comprising at least two blades (1) according to any one of claims 1 to 7.

**Fig.1**

**Fig.2**

**Fig.3**

# Fig.4

# Fig.5

# Fig.6

# Fig.7

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0842846 A
- US 7252479 B
- EP 0565413 A
- EP 1557354 A
- US 20120251326 A
- US 6116857 A

**Littérature non-brevet citée dans la description**

- Multiobjective-Multipoint Rotor Blade Optimization in Forward Flight Conditions Using Surrogate-Assisted Memetic Algorithms. *European Rotorcraft Forum,* Septembre 2011